# EUROPÄISCHE PATENTSCHRIFT

(11) **EP 1 459 045 B1**
(45) Veröffentlichungstag und Bekanntmachung des Hinweises auf die Patenterteilung: **13.05.2009**
(21) Anmeldenummer: 02772373.3
(22) Anmeldetag: 12.10.2002
(51) Int. Cl.: G01L 7/08, G01L 9/00, G01L 13/02

(54) **DRUCKMITTLER MIT TRENNMEMBRAN UND VERFAHREN ZU DESSEN HERSTELLUNG**
PRESSURE MEDIATOR WITH SEPARATING MEMBRANE AND METHOD FOR THE PRODUCTION THEREOF
SYSTEME DE TRANSMISSION DE PRESSION A MEMBRANE DE SEPARATION ET SON PROCEDE DE PRODUCTION

(30) Priorität: 19.10.2001 DE 10152681
(43) Veröffentlichungstag der Anmeldung: 22.09.2004
(73) Patentinhaber: Endress + Hauser GmbH + Co. KG, 79689 Maulburg (DE)
(72) Erfinder: BURCZYK, Dietfried, 14513 Teltow (DE); DANNHAUER, Wolfgang, 14513 Teltow (DE)
(74) Vertreter: Andres, Angelika Maria
(86) Internationale Anmeldenummer: PCT/EP2002/011440
(87) Internationale Veröffentlichungsnummer: WO 2003/036250

(56) Entgegenhaltungen:
- EP-A- 0 655 615
- EP-A- 1 114 987
- PATENT ABSTRACTS OF JAPAN vol. 007, no. 150 (P-207), 30. Juni 1983 (1983-06-30) & JP 58 060232 A (HITACHI SEISAKUSHO KK), 9. April 1983 (1983-04-09)

## Beschreibung

Die Erfindung bezieht sich auf einen Druckmittler zur Übertragung eines Drucks von einem in einem ersten Medium vorherrschenden Druck auf ein zweites Medium.

Ein Druckmittler umfaßt einem Grundkörper und eine Trennmembran, die mit ihrem Rand an dem Grundkörper befestigt ist, wobei die Trennmembran mit ihrer ersten, dem Grundkörper abgewandten Oberfläche mit dem ersten Medium in Kontakt gebracht werden kann, und mit ihrer zweiten, dem Grundkörper zugewandten Oberfläche und dem Grundkörper eine Druckkammer bildet, die mit dem zweiten Medium befüllbar ist, wobei die Druckkammer eine Druckkammeröffnung aufweist, durch welche der Druck mittels des zweiten Mediums übertragen werden kann. Das zweite Medium ist gewöhnlich eine inkompressible Flüssigkeit, insbesondere ein Hydrauliköl.

Ein derartiger Druckmittler ist aus dem Dokument EP-B1-0655615 bekannt.

Trennmembranen weisen gewöhnlich ein Relief von konzentrischen Wellenzügen auf, die einen hinreichend großen Membranhub ermöglichen, um ein variables Volumen der Übertragungsflüssigkeit in der Druckkammer aufzunehmen. Die Oberfläche des Grundkörpers in der Druckkammer ist gewöhnlich als

Membranbett gestaltet, dessen Relief weitgehend mit der Form der Trennmembran übereinstimmt, so daß die Trennmembran im Überlastfall flächig an dem Membranbett anliegen kann. Die Trennmembranen werden gewöhnlich auf dem Membranbett abgeprägt, um ihnen das gewünschte Relief zu geben.

Bei Druckmittlern für den Einsatz mit korrosiven Medien sind Trennmembranen aus einem korrosionsbeständigen Werkstoff, insbesondere einem korrosionsbeständigen Metall oder einer korrosionsbeständigen Legierung bevorzugt. Trennmembranen aus Tantal finden für diesen Zweck bevorzugt Verwendung. Insofern, als die Grundkörper gewöhnlich aus VA-Stahl gefertigt sind, ergeben sich in der Praxis Probleme aufgrund der unterschliedlichen Wärmausdehnungskoeffizienten von Tantal und Stahl, die 6,5 10⁻⁶/K für Tantal und etwa 16 10⁻⁶/K für V2A-Stahl betragen.

Geht man beispielsweise davon aus, daß die Druckmittler über eine Temperaturspanne von etwa 300 K eingesetzt sein sollen, beispielsweise zwischen 230°K und 530°K, so dehnt sich eine Trennmembran aus Tantal über diese Temperaturspanne nur um 0,21% aus, während die Ausdehnung des V2A-Grundkörpers 0,48% beträgt. Der Unterschied in der Wärmeausdehnung über diesen Temperaturbereich beträgt also 0,27%.

Zur pointierten Verdeutlichung des sich daraus ergebenden Problems wird zunächst von einer planaren Membran ausgegangen. Eine planare kreisförmige Trennmembran, die beim oberen Temperaturgrenzwert kräftefrei an dem Grundkörper angeschweißt ist, würde bei dem unteren Temperaturgrenzwert eine Gleichgewichtslage mit einer Durchbiegung von etwa 6,3% des Radius aufweisen. Genauer würde es zwei Gleichgewichtslagen geben, die +/- 6,3% außerhalb der Ebene des Membranrands liegen würden. Eine solche bistabile Membran wäre offensichtlich für einen Sensor unbrauchbar. Das kräftefreie Einschweißen einer planaren Trennmembran beim unteren Temperaturgrenzwert würde zwar das Problem der Durchbiegung aufgrund unterschiedlicher Wärmeausdehnungskoeffizienten vermeiden, aber bei Erwärmung würden große radiale Zugspannungen aufgrund der unterschiedlichen Ausdehnungskoeffizienten auftreten. Hierdurch würde für die Eignung einer solchen Trennmembran beeinträchtigt.

Die erwähnten Trennmembranen mit konzentrischen Wellenzügen lindern das beschriebene Problem, denn die Wellenzüge enthalten einerseits hinreichend radiale Längenreserven um Wärmeausdehnungsunterschiede auszugleichen, und andererseits führt die Prägung der Wellenzüge zu einer moderaten radialen Zugspannung, welche die Durchbiegung der Membran bei einer Kontraktion des Grundkörpers zumindest verringert. Jedoch treten bei tiefen Temperaturen immer noch Durchbiegungen auf.

Es ist daher die Aufgabe der vorliegenden Erfindung, einen Druckmittler mit einer Trennmembran bereitzustellen, der die Nachteile des Stands der Technik überwindet. Diese Aufgabe wird erfindungsgemäß gelöst durch den Druckmittler gemäß des unabhängigen Anspruch 1, und das Verfahren gemäß des unabhängigen Anspruchs 6 .
Der erfindungsgemäße Druckmittler umfaßt einen Grundkörper, der ein erstes Material aufweist, und eine Trennmembran, die ein zweites Material mit einem kleineren Wärmeausdehnungskoeffizienten als das erste Material umfaßt, und die mit ihrem Rand an dem Grundkörper befestigt ist, wobei der Grundkörper ein Membranbett aufweist, welches von der Trennmembran überdeckt ist und ein Relief aufweist, wobei ferner die Trennmembran ein Trennmembranrelief aufweist, welches durch Prägung gegen das Membranbett nach der Befestigung der Trennmembran am Grundkörper gebildet wurde, **dadurch gekennzeichnet, daß** die Prägung des Membranreliefs bei einer Temperatur von weniger als etwa 10°C erfolgte.

Die Temperatur bei der Prägung beträgt bevorzugt höchstens 0°C, weiter bevorzugt höchstens -10°C und besonders bevorzugt höchstens - 20°C. In einer ganz besonders bevorzugten Ausführungsform beträgt die Temperatur bei der Prägung weniger als -40°C.

Der Begriff Temperatur bezieht sich auf die Temperatur, welche die geometrischen Verhältnisse der Trennmembran und des Membranbetts bestimmt, also beispielsweise den freien Trennmembrandurchmesser über dem Membranbett und den Abstand zwischen benachbarten Wellenzügen des Membranbetts bestimmt. Dies wird in den meisten Fällen die Grundkörpertemperatur sein, auf die der Grundkörper vor dem Prägen abgekühlt wird. Insofern als die Trennmembran eine erheblich geringere Wärmekapazität aufweist als der Grundkörper und mit diesem im guten Wärmekontakt verbunden ist, wird die Trennmembran ebenfalls die etwa die Grundkörpertemperatur aufweisen, wenn nicht besondere Maßnahmen ergriffen werden, um die Trennmembran auf einer höheren Temperatur zu halten.

Wenn die Trennmembran beim Prägen mit einem Prägestock oder einem hydraulischen Medium auf einer anderen Temperatur in Kontakt gelangt, so wird dies die Temperatur der Membran und ggf. des Membranbetts in gewissen Grenzen verändern. Die Prägung sollte daher bevorzugt so schnell erfolgen, daß die Temperaturänderung durch die Prägung einen möglichst geringen Einfluß auf die Geometrie zum Zeitpunkt der Prägung hat.

Tests haben ergeben, daß die Trennmembranen der erfindungsgemäßen Druckmittler auch bei tiefen Betriebstemperaturen noch eine wohldefinierte Gleichgewichtslage und eine stetige Volumen-Druck-Kennlinie aufweisen.

Die Erfindung wird anhand der nachfolgenden Zeichnungen näher erläutert. Es zeigt:
- Fig. 1 a-c:: Eine Serie von Schnittzeichnungen durch einen erfindungsgemäßen Druckmittler während verschiedener Herstellungsschritte.
- Fig. 2:: Ein Diagramm mit verschiedenen Druck-Volumen-Kennlinien.

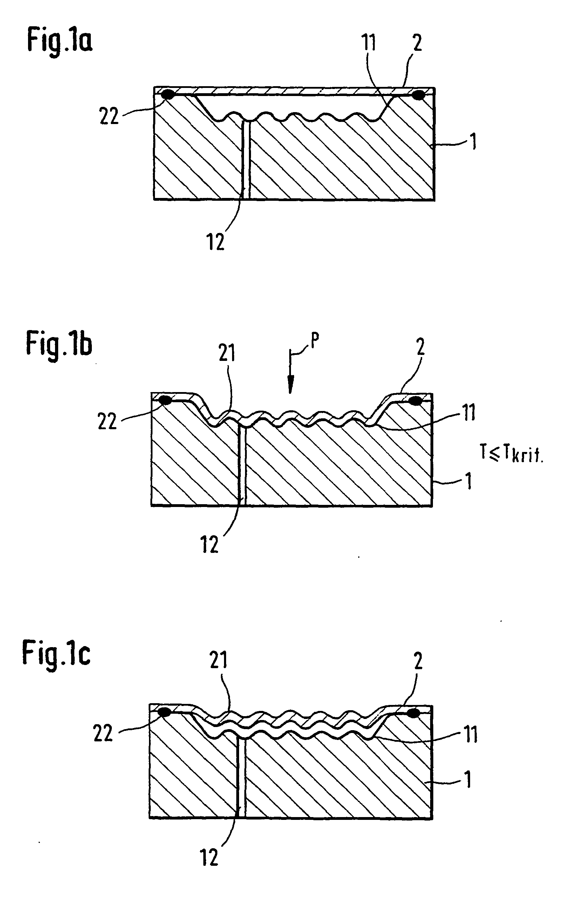

Fig. 1 zeigt einen Querschnitt durch den erfindungsgemäßen Druckmittler während verschiedener Phasen der Herstellung. In den Teilfiguren a bis c ist ein zylindrischer Grundkörper 1 dargestellt der an einer Stirnseite ein Membranbett 11 aufweist, wobei sich ein Kanal 12 von dem Membranbett zur gegenüberliegenenden Stirnseite des Grundkörpers erstreckt. In den Figuren ist der Kanal parallel zur Symetrieachse des Grundkörpers dargestellt, grundsätzlich kann der Kanal jedoch eine beliebige andere Form aufweisen, solange er eine Verbindung zwischen dem Membranbett und einer anderen Oberfläche des Grundkörpers 1 herstellt. An der ersten Stirnfläche des Grundkörpers ist eine Trennmembran 2 zunächst als eine ebene Scheibe bzw. Ronde druckdicht befestigt, wobei die Trennmembran 2, dass Membranbett 11 vollständig überdeckt. Die Befestigung erfolgt vorzugsweise durch Schweißen entlang einer in sich geschlossenen Schweißnaht 22 im Randbereich der Membran oder durch eine entsprechende Hartlotverbindung, wie in Fig. 1a dargestellt ist. Anschließend wird das Relief des Membranbetts 11 auf der Trennmembran 2 abgeprägt, in dem die Trennmembran 2 in geeigneter Weise mit einem Prägedruck P beaufschlagt wird, bis die Trennmembran 2 vollständig an dem Membranbett anliegt (Fig. 1 b).
Der Prägedruck P kann beispielsweise hydraulisch auf die Trennmembran 2 einwirken, oder die Prägung kann mit einem elastischen Stempel, beispielsweise aus Gummi erfolgen, der sich dem Membranbettrelief 11 bzw. dem entstehenden Trennmembranrelief 21 anpasst. Durch die Prägung ist die Trennmembran plastisch verformt und weist in ihrer neuen Gleichgewichtslage das Trennmembranrelief 21 auf.

Durch die Prägung der Trennmembran 2, werden einerseits Zugspannungen in die Membran 2 eingeführt, und andererseits enthält die Membrankontur 21 hinreichende Längenreserven, um einen ausreichenden Hub der Trennmembran 2 zur Aufnahme von Volumenschwankungen einer Übertragungsflüssigkeit zu ermöglichen.

Wie zuvor diskutiert, ist das Ausmaß der Zugspannungen eine Funktion der gerade vorliegenden Temperatur, insbesondere dann, wenn der Grundkörper und die Trennmembran einen anderen Wärmeausdehnungskoeffizienten aufweisen.

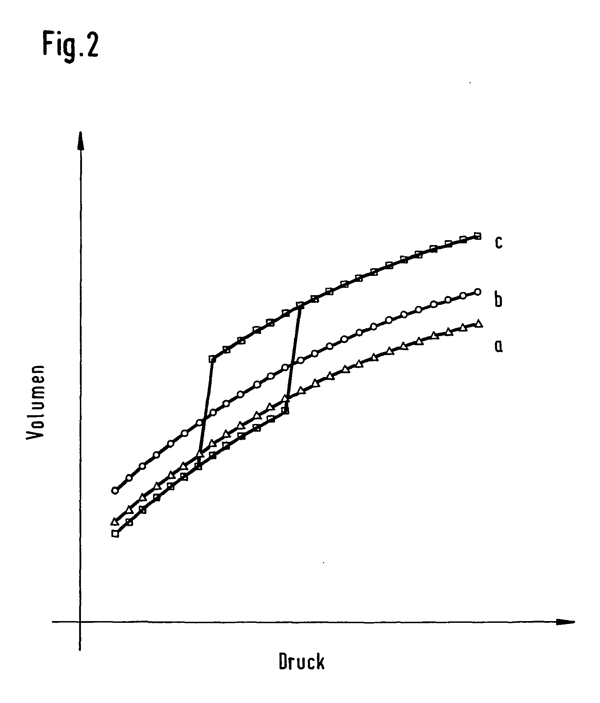

Der Einfluß verschiedener Prägetemperaturen auf die Membrankennlinie bei tiefen Temperaturen ist im Diagramm der Fig 2. dargestellt. Die Kennlinien des Diagramms zeigen das Volumen zwischen der Membran und dem Membranbett als Funktion des Drucks.

Im einzelnen zeigt die Kurve a die Kennlinie einer Membran bei einer tiefen Temperatur, beispielsweise minus 20 Grad, wobei die Prägung der Membran bei Raumtemperatur erfolgte. Die Membran und die Grundkörper weisen den gleichen Wärmeausdehnungskoeffizienten auf, so dass eine Abkühlung des Druckmittlers nicht zu einem "Durchhängen" der Membran führt. Über dem mit einem Pfeil angedeutetem Arbeitsbereich der Membran weist die Kennlinie ein wesentliches lineares Verhalten auf.
Die Kurve c zeigt dagegen die Kennlinie einer Membran, die bei Raumtemperatur auf einem Grundkörper mit einem größeren Wärmeausdehnungskoeffizienten abgeprägt wurde. Bei tiefen Temperaturen führt dies zu einer unstetigen Membrankennlinie mit den im Diagramm angedeuteten Hysterese-Erscheinungen. Die Verwendung von Druckmittlern mit solchen Membrankennlinien erfordern große Kompromisse hinsichtlich der Messgenauigkeit und sollten daher nicht zum Einsatz kommen.

Die Kurve b zeigt schließlich die Membrankennlinie eines erfindungsgemäßen Druckmittlers mit beispielsweise einer Tantaltrennmembran auf einem Stahlgrundkörper bei tiefen Temperaturen. Zwar weist auch hier die Membran einen kleineren Wärmeausdehnungskoeffizienten als der Grundkörper auf, auf dem sie befestigt ist, jedoch erfolgte das Abprägen des Membranbetts bei einer hinreichend tiefen Temperatur, beispielsweise -20°C. Hierdurch ist gewährleistet, daß die Trennmembran bei den im Messbetrieb zu erwartenden tiefen Temperaturen noch hinreichende innere Zugspannungen aufweist. Daher hat die Trennmembran trotz der unterschiedlichen Wärmeausdehnungskoeffizienten zwischen Membran und Grundkörper auch bei tiefen Temperaturen noch eine lineare Kennlinie.

Bei Trennmembranen, deren Wellenzüge im zentralen Bereich der Membran im wesentlichen um eine bezüglich des Membranrands versetzte Ebene verlaufen, geht die Absenkung der Prägetemperatur mit einer Vergrößerung des zwischen der Membran und dem Membranbett eingeschlossenen Volumens in der Gleichgewichtslage einher. Denn aufgrund der verbleibenden inneren Zugspannungen der Membran bei tieferen Temperaturen wird der Abstand zwischen der Ebene des Membranrands und der Ebene des zentralen Membranbereichs verringert. Daher verläuft die Kurve b in Fig. 2 nahe der Gleichgewichtslage oberhalb der Kurve c. Bei ansonsten unveränderten Gerätedaten ist das Gleichgewichtsvolumen bei tiefen Temperaturen somit ein Indikator für die Prägetemperatur.

Wenngleich die Prägung derzeit bevorzugt hydraulisch, insbesondere mit einer Wassersäule oder einem Hydrauliköl erfolgt, kann gleichermaßen ein flexibler Stempel, beispielsweise aus Gummi oder einem anderen Elastomer eingesetzt werden, der sich der Kontur des Membranbetts hinreichend flexibel anpaßt. Ebenfalls sind Stempel mit einer metallischen Matrize geeignet, wobei die Matrize komplementär zum angestrebten Membranrelief bzw. komplementär zum Relief des Membranbetts gestaltet ist.

Für besondere Anwendungsfälle, bei denen die Prägetemperatur möchlichst tief sein soll und nicht von einem Stempel oder einem hydraulischen Medium verfälscht werden soll, kann die Prägung auch mit flüssigem Stickstoff oder anderen Substanzen erfolgen, deren Gefrierpunkt unterhalb der Prägetemperatur liegt.

Gleichermaßen kann für Prägungen bei tiefen Temperaturen ein Stempel eingesetzt werden, der eine Kühleinrichtung aufweist. Hierzu kann im Inneren des des Stempels im guten Wärmekontakt mit dessen Prägefläche, beispielsweise einer metallischen Matrize, ein Kühlkreislauf angeordnet sein, der von einem geeigneten Kühlmittel durchströmt werden kann. Als Kühlmittel für extrem niedrige Temperaturen ist insbesondere flüssiger Stickstoff geeignet.

Die Prägung der Trennmembran erfolgt vorzugsweise bei einem Druck zwischen 150 und 500 bar, weiter bevorzugt zwischen 200 und 400 bar und besonders bevorzugt zwischen 250 und 350 bar.

Der Prägedauer beträgt vorzugsweise zwischen 1 und 120 Sekunden, weiter bevorzugt zwischen 10 und 90 Sekunden und besonders bevorzugt zwischen 30 und 60 Sekunden.

## Patentansprüche

1. Druckmittler mit:
einem Grundkörper (1) mit einem Membranbett (11), wobei der Grundkörper (1) ein erstes Material mit einem ersten Wärmeausdehnungskoeffizienten aufweist; und
einer Trennmembran (2), die ein zweites Material mit einem zweiten Wärmeausdehnungskoeffizienten aufweist, der kleiner ist als der erste Wärmeausdehnungskoeffizient, wobei die Trennmembran (2) in ihrem Randbereich dergestalt an dem Grundkörper (1) befestigt ist, daß das Membranbett (11) von der Trennmembran (2) überdeckt ist, wobei ferner die Trennmembran (2) ein Trennmembranrelief (21) aufweist, welches durch Prägen gegen das Membranbett nach der Befestigung der Trennmembran am Grundkörper gebildet wurde; **dadurch gekennzeichnet,**
**daß** die Prägung des Membranreliefs bei einer Temperatur von weniger als etwa 10°C erfolgte.

2. Druckmittler nach Anspruch 1 wobei die Prägung der Trennmembran (2) bei einer Temperatur von höchstens 0°C, bevorzugt höchstens -10°C und weiter bevorzugt höchstens - 20°C und besonders bevorzugt höchstens -40°C betrug.

3. Druckmittler nach Anspruch 1 oder 2, wobei die Trennmembran (2) eine korrosionsfeste Legierung oder Tantal aufweist.

4. Druckmittler nach einem der Ansprüche 1 bis 3, wobei der Grundkörper einen VA-Stahl aufweist.

5. Druckmittler nach einem der vorhergehenden Ansprüche, wobei die Trennmembran (2) mit einer in sich geschlossenen Schweißnaht (22) oder einer Hartlotverbindung am Grundkörper (1) befestigt ist.

6. Verfahren zur Herstellung eines Druckmittlers, umfassend die Schritte:
(i) Bereitstellen eines Grundkörpers (1) mit einem Membranbett (11),
(ii) Befestigen einer Trennmembran (2) an dem Grundkörper (1),
(iii) Abprägen des Membranbetts (11) auf die Trennmembran (2),
**dadurch gekennzeichnet,**
**daß** der Schritt (iii) des Abprägens bei einer Temperatur von höchstens 10°C erfolgt.

7. Verfahren nach Anspruch 6 wobei der Schritt (iii) des Abprägens bei einer Temperatur von höchstens 0°C, bevorzugt höchstens -10°C und weiter bevorzugt höchstens - 20°C und besonders bevorzugt höchstens -40°C erfolgt.

8. Verfahren nach Anspruch 6 oder 7, wobei der Schritt (iii) des Abprägens hydraulisch erfolgt.

9. Verfahren nach Anspruch 6 oder 7, wobei der Schritt (iii) des Abprägens mit einem Prägedruck zwischen 250 und 350 bar erfolgt.

10. Verfahren nach Anspruch 8, wobei die hydraulische Prägung mit einer hydraulischen Flüssigkeit erfolgt, deren Temperatur nicht mehr als 20°C beträgt.

## Claims

1. Diaphragm seal with:
a meter body (1) with a diaphragm bed (11), where the meter body (1) exhibits a first material with a first thermal expansion coefficient; and
a second separating diaphragm (2), which exhibits a second material with a second thermal expansion coefficient that is smaller than the first thermal expansion coefficient, whereby the edge of the separating diaphragm (2) is secured to the meter body (1) in such a way that the diaphragm bed (11) is covered by the separating diaphragm (2), and whereby the separating diaphragm (2) exhibits a separating diaphragm pattern (21) which has been formed by embossing against the diaphragm bed after securing the separating diaphragm to the meter body, **characterized in that:**
the diaphragm pattern was embossed at a temperature of less than approximately 10°C.

2. Diaphragm seal as per Claim 1, where the separating diaphragm (2) is embossed at a maximum temperature of 0°C, preferably at a temperature of -10°C at most, more preferably at a temperature of -20°C at most, and most preferably at a temperature of -40°C at most.

3. Diaphragm seal as per Claim 1 or 2, where the separating diaphragm (2) exhibits a corrosion-resistant alloy or tantalum.

4. Diaphragm seal as per one of the Claims 1 to 3, where the meter body exhibits high-resistance steel.

5. Diaphragm seal as per one of the previous claims, where the separating diaphragm (2) is secured to the meter body (1) with a closed welding seam (22) or a brazing joint.

6. Process for producing a diaphragm seal, comprising the following steps:
(i) Providing a meter body (1) with a diaphragm bed (11)
(ii) Securing a separating diaphragm (2) to the meter body (1)
(iii) Impressing the diaphragm bed (11) onto the separating diaphragm (2), **characterized in that** the process of impressing the diaphragm bed takes place at a maximum temperature of 10°C.

7. Process as per Claim 6, where the impressing process in step (iii) takes place at a maximum temperature of 0°C, preferably at a temperature of -10°C at most, more preferably at a temperature of -20°C at most, and most preferably at a temperature of -40°C at most.

8. Process as per Claim 6 or 7, whereby process step (iii) takes place hydraulically.

9. Process as per Claim 6 or 7, whereby process step (iii) takes place at an embossing pressure of between 250 and 350 bar.

10. Process as per Claim 8, whereby hydraulic embossing takes place with a hydraulic liquid whose temperature does not exceed 20°C.

## Revendications

1. Séparateur comprenant
un corps de base (1) avec un lit de membrane (11), le corps de base (1) étant constitué d'une première matière avec un premier coefficient de dilatation thermique ; et
une membrane de séparation (2), qui se compose d'une deuxième matière avec un deuxième coefficient de dilatation thermique, lequel est inférieur au premier coefficient de dilatation thermique, la membrane de séparation (2) étant fixée dans sa zone marginale au corps de base (1) de telle sorte que le lit de membrane (11) soit recouvert par la membrane de séparation (2), la membrane de séparation (2) présentant en outre un relief de membrane de séparation (21), lequel est formé par estampage contre le lit de membrane après la fixation de la membrane de séparation au corps de base ; **caractérisé en ce que**
l'estampage du relief de membrane a été réalisé à une température inférieure à environ 10°C.

2. Séparateur selon la revendication 1, pour lequel l'estampage de la membrane de séparation (2) a été effectué à une température maximale de 0 °C, de préférence à une température maximale de -10 °C, particulièrement de préférence à une température maximale de -20 °C et tout particulièrement de préférence à une température maximale de -40 °C.

3. Séparateur selon la revendication 1 ou 2, pour lequel la membrane de séparation (2) se compose d'un alliage ou d'un tantale résistant à la corrosion.

4. Séparateur selon l'une des revendications 1 à 3, pour lequel le corps de base est en acier VA.

5. Séparateur selon l'une des revendications précédentes, pour lequel la membrane de séparation (2) est fixée au corps de base (1) au moyen d'un cordon de soudure (22) fermé ou d'une brasure.

6. Procédé destiné à la fabrication d'un séparateur, comprenant les étapes suivantes :
(i) Mise à disposition d'un corps de base (1) avec un lit de membrane (11),
(ii) Fixation d'une membrane de séparation (2) sur le corps de base (1),
(iii) Estampage du lit de membrane (11) sur la membrane de séparation (2),
**caractérisé en ce que**
l'étape (iii) de l'estampage est réalisée à une température maximale de 10 °C.

7. Procédé selon la revendication 6, pour lequel l'étape (iii) de l'estampage s'effectue à une température maximale de 0 °C, de préférence à une température maximale de -10 °C, particulièrement de préférence à une température maximale de -20 °C et tout particulièrement de préférence à une température maximale de -40 °C.

8. Procédé selon la revendication 6 ou 7, pour lequel l'étape (iii) de l'estampage s'effectue de façon hydraulique.

9. Procédé selon la revendication 6 ou 7, pour lequel l'étape (iii) de l'estampage s'effectue à une pression comprise entre 250 et 350 bars.

10. Procédé selon la revendication 8, pour lequel l'estampage hydraulique s'effectue au moyen d'un liquide hydraulique, dont la température n'est pas supérieure à 20 °C.
